(19) Europäisches Patentamt / European Patent Office / Office européen des brevets

(11) **EP 2 212 193 B1**

## (12) FASCICULE DE BREVET EUROPEEN

(45) Date de publication et mention
de la délivrance du brevet:
**06.07.2011 Bulletin 2011/27**

(21) Numéro de dépôt: **08840878.6**

(22) Date de dépôt: **16.10.2008**

(51) Int Cl.:
**B64C 9/12** *(2006.01)* **B64C 13/16** *(2006.01)*
**B64C 23/06** *(2006.01)*

(86) Numéro de dépôt international:
**PCT/FR2008/051869**

(87) Numéro de publication internationale:
**WO 2009/053649 (30.04.2009 Gazette 2009/18)**

(54) **PROCÉDÉ ET DISPOSITIF POUR DIMINUER LES VITESSES INDUITES DANS DES TOURBILLONS DE SILLAGE D'UN AVION**

VERFAHREN UND VORRICHTUNG ZUM REDUZIEREN DER INDUZIERTEN GESCHWINDIGKEITEN IN WIRBELSCHLEPPEN HINTER EINEM FLUGZEUG

METHOD AND DEVICE FOR REDUCING THE INDUCED SPEEDS IN VORTICES IN THE WAKE OF AN AIRCRAFT

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **16.10.2007 FR 0758344**

(43) Date de publication de la demande:
**04.08.2010 Bulletin 2010/31**

(73) Titulaire: **AIRBUS OPERATIONS (SAS)**
**31060 Toulouse (FR)**

(72) Inventeur: **Journade, Jérôme**
**F-31100 Toulouse (FR)**

(74) Mandataire: **Maupilier, Didier**
**Schmit Chretien SNC**
**111 Cours du Médoc**
**CS 400009**
**33070 Bordeaux Cedex (FR)**

(56) Documents cités:
**EP-A- 1 145 954    EP-A- 1 746 024**
**FR-A- 2 821 605**

• **NORRIS G: "AWIATOR PREPARES FOR WAKE VORTEX REDUCTION EXPERIMENT" FLIGHT INTERNATIONAL, REED BUSINESS INFORMATION, SUTTON SURREY, GB, vol. 169, no. 5020, 24 janvier 2006 (2006-01-24), page 30, XP001237891 ISSN: 0015-3710**

**Description**

La présente invention appartient au domaine du contrôle du vol des avions. Plus particulièrement l'invention trouve application au cours des phases terminales du vol des avions, phases aux cours desquelles un avion en approche sur une piste d'atterrissage est normalement susceptible d'être suivi à une relativement courte distance par un autre avion en approche.

Une aile d'avion en déplacement relatif par rapport à l'air génère des tourbillons dont l'intensité est de manière générale d'autant plus importante que la portance générée par l'aile est élevée.

En pratique des tourbillons sont générés par toute surface aérodynamique portante d'envergure finie et une aile d'avion est la source de divers tourbillons, généralement par paires, un tourbillon sur un côté de l'aile ayant un symétrique par rapport à un plan de symétrie de l'avion.

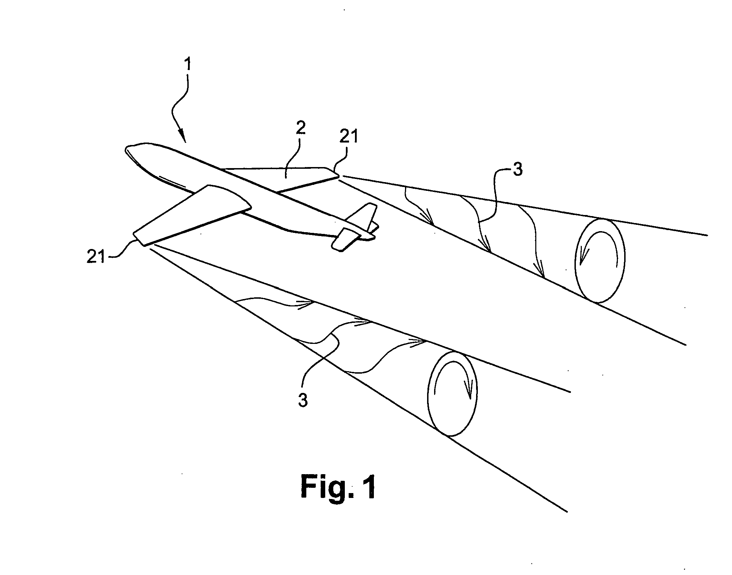

Ce phénomène, illustré schématiquement sur la figure 1 par la représentation des enroulements de nappes tourbillonnaires attachés aux extrémités de l'aile, est bien connu et pour diverses raisons il est intéressant de réduire l'intensité des tourbillons 3 d'une aile 2 d'un avion 1, ce qui est réalisé par exemple en adaptant la forme de l'aile.

Une des raisons pour laquelle les constructeurs d'avion cherchent à réduire l'intensité des tourbillons générés par les ailes des avions est liée au danger qu'un tourbillon peut représenter pour un avion dont la trajectoire traverse un tourbillon provoqué par le passage d'un autre avion.

Le danger en question dépend de l'intensité du tourbillon relativement à la masse de l'avion dont la trajectoire traverse le tourbillon. D'une simple diminution du confort de pilotage et du confort des passagers lorsque l'intensité relative est faible, l'avion peut rencontrer des difficultés à maintenir sa trajectoire voire peut dévier de sa trajectoire nominale lorsque le tourbillon est d'intensité modérée ou forte, par exemple avec des déconnexions de pilote automatique, et dans des cas extrêmes le niveau des turbulences générées par le tourbillon peut mettre en péril l'intégrité physique de l'avion.

Une méthode, appliquée par tous les organismes en charge de gérer la circulation des avions en vol, consiste à organiser les trajectoires des avions dans l'espace et dans le temps pour maintenir une distance, dite distance de séparation Ds, suffisante entre un avion suiveur situé sensiblement sur une même trajectoire qu'un avion le précédent.

Du fait de cette distance de séparation, un temps minimum s'écoule avant que l'avion suiveur risque pénétrer dans le tourbillon de l'avion précédent.

Pendant ce temps minimum le tourbillon généré par le passage de l'avion précédent a évolué en se déplaçant latéralement ou verticalement par rapport à la trajectoire et les vitesses induites dans le tourbillon ont diminué du fait de l'interaction dudit tourbillon avec l'atmosphère pour ne plus présenter de risque pour l'avion suiveur.

En particulier ces temps minimums s'appliquent à des avions pendant les phases d'approche, phases pendant lesquelles la concentration de l'espace aérien en avions et la convergence nécessaire des trajectoires vers les pistes d'atterrissage sont telles autour des aéroports que le problème de la séparation des avions s'avère critique.

L'Organisation de l'Aviation Civile Internationale (OACI) définit les distances de séparation minimales qui doivent être appliquées par le contrôle aérien.

Ces distances de séparations sont fonction des masses respectives des avions concernés. Plus l'avion précédent est lourd et plus l'avion suiveur est léger, plus la distance de séparation minimale doit être grande en raison de la plus grande intensité des tourbillons générés par les avions lourds et de la plus grande sensibilité aux tourbillons des avions légers.

Par exemple pour un avion suiveur dit moyen, de masse comprise entre 7 et 136 tonnes, la distance de séparation définie par l'OACI est de 3 miles nautiques si l'avion précédent est un avion léger, de masse inférieure à 7 tonnes, ou un autre avion moyen, et cette distance de séparation est augmentée à 5 miles nautiques si l'avion précédent est un avion lourd de masse supérieure à 136 tonnes.

Lorsqu'un avion léger suit un avion lourd, la distance de séparation est augmentée à 6 miles nautiques.

Ces distances minimales de séparation, nécessaires, sont contraignantes pour la gestion du trafic aérien et constituent une limite à l'augmentation des capacités d'un aéroport.

Pour diminuer les distances de séparations minimales, ou pour ne pas être contraint de les augmenter dans certains cas, une méthode consiste à accélérer la destruction naturelle du tourbillon généré par un avion.

Le brevet FR 2821605, également publié en tant que brevet US 6719246, décrit un dispositif fixé sur l'aile d'un avion et qui engendre une perturbation périodique de l'écoulement, laquelle perturbation excite au moins un mode d'instabilité du tourbillon avec pour effet d'en accélérer la destruction naturelle.

Ce dispositif permet donc de réduire la distance de séparation minimale entre deux avions sur des trajectoires proches, cependant il nécessite d'agencer sur chaque avion des moyens spécifiques qui doivent être déterminés pour chaque modèle d'avion et qui peuvent poser des difficultés particulières d'installation d'autant plus qu'il est important que les moyens spécifiques en question ne génèrent pas une traînée significative pendant les phases de croisière de l'avion.

Ainsi si un tel système peut être introduit avec des contraintes lors de la conception d'un nouvel avion, il est plus difficile à définir pour des modèles d'avions existants et nécessite l'application de modifications significatives pour les avions en exploitation qui ne sont pas équipés d'origine avec le dispositif.

Une autre méthode connue, par exemple du document EP 1 746 024, basée sur des observations également publiée dans un article « awiator prepares for wake vortex reduction experiment » (Flight International 24-30janvier 2006), pour diminuer l'intensité des tourbillons consiste à déterminer expérimentalement une position considérée optimale des spoilers pour laquelle le rayon et la vitesse du tourbillon sont diminués par rapport à une position rentrée des spoilers sans trop pénaliser les performances de l'avion et à appliquer la position ainsi identifiée lors des phases d'approche. Dans une telle solution, il est nécessaire, bien que la pénalité cherche à être minimisée, de compenser la diminution réelle des performances aérodynamiques par une augmentation de la poussée des moteurs, source de nuisances sonores.

Sans nécessiter de modification significative des avions, le procédé suivant l'invention crée un espace protégé continu le long d'une trajectoire d'un avion.

Dans l'espace protégé une vitesse maximale Vtc induite dans un tourbillon de rayon Rtc d'un sillage de l'avion est diminuée par une augmentation du rayon Rtc, en appliquant le procédé qui comporte :

- une étape préalable d'identification de changements de configurations aérodynamiques de l'avion aptes à déclencher des perturbations de sillage ayant pour effet d'augmenter le rayon Rtc ;
- pour chaque changement de configuration apte à déclencher une perturbation de sillage, la détermination préalable de caractéristiques de propagation des perturbations de sillage dans des sections du tourbillon voisines d'une section du tourbillon au niveau de laquelle a été réalisé ledit changement de configuration;
- la réalisation le long de la trajectoire de l'avion d'au moins deux changements de configuration séparés sur la dite trajectoire par une distance telle que des espaces, dans lesquels les effets des perturbations de sillage conséquences de chacun des dits aux moins deux changements de configuration se sont propagés pendant une durée prédéterminée, sont séparés d'une distance sensiblement nulle ou se recouvrent afin de créer un espace protégé continu.

De préférence pour déterminer les dimensions de l'espace protégé, les caractéristiques de propagation de perturbation de sillage utilisées comportent :

- une durée $\Delta$Tps correspondant au temps nécessaire pour que le rayon Rtc du tourbillon augmente d'une valeur $\Delta$Rt% prédéfinie dans une section du tourbillon sous l'effet de la perturbation de sillage après que ladite perturbation de sillage a atteint ladite section du tourbillon ;
- une vitesse de propagation Vpp-amont de la perturbation de sillage le long du tourbillon dans une direction, dite direction amont, opposée à la direction du déplacement de l'avion le long de sa trajectoire ;
- une vitesse de propagation Vpp-aval de la perturbation de sillage le long du tourbillon dans une direction, dite direction aval, correspondant à la direction du déplacement de l'avion le long de sa trajectoire.

Pour optimiser l'espace protégé, de préférence la distance séparant un point d'un changement de configuration, dit premier changement de configuration, d'un point d'un changement de configuration, dit second changement de configuration, suivant le premier changement de configuration le long de la trajectoire de l'avion est fonction d'une distance de séparation Ds entre l'avion et un avion suiveur situé en amont sensiblement sur la même trajectoire que l'avion et d'une vitesse Vav de l'avion suiveur.

La vitesse Vav de l'avion suiveur est par exemple une valeur mesurée ou une valeur estimée ou encore une valeur arbitraire supérieure à la vitesse de l'avion suiveur lorsque cette vitesse n'est pas connue.

Afin d'obtenir la plus grande dimension possible de l'espace protégé, la distance séparant le premier et le second changements de configuration est inférieur ou sensiblement égal à la somme d'une distance Daval en aval du point de premier changement de configuration suivant la trajectoire de l'avion et d'une distance Damont en amont du point de second changement de configuration suivant la trajectoire de l'avion avec :

- Daval = ( Ds - $\Delta$Tps x Vav ) x Vpp-aval / (Vav - Vpp-aval), avec les valeurs de $\Delta$Tps et de Vpp-aval choisies parmi les caractéristiques de propagation de la perturbation de sillage associée au premier changement de configuration ;
- Damont = ( Ds - $\Delta$Tps x Vav ) x Vpp-amont / (Vav + Vpp-amont), avec les valeurs de $\Delta$Tps et de Vpp-amont choisies parmi les caractéristiques de propagation de la perturbation de sillage associée au second changement de configuration.

Pour limiter les conséquences sur la conception d'un avion et pour appliquer aisément le procédé avec un avion dont la définition est déjà réalisée, par exemple un avion existant, les changements de configuration sont avantageusement réalisés par des changements de position de surfaces mobiles de l'avion, par exemple des volets de bord de fuite et ou des becs de bord d'attaque et ou des destructeurs de portance et ou des ailerons, et ou par un changement d'assiette de l'avion lors d'un atterrissage.

Compte tenu des phases basses altitudes de vol des avions, le procédé est utilisé pour créer un espace protégé lors des phases d'approche terminale et les changements de configuration sont réalisés le long d'une trajectoire correspondant à une phase d'approche de l'avion se terminant par un atterrissage en un point Att de telle sorte que l'espace protégé continu s'étend depuis un point de la trajectoire d'approche éloigné du point Att jusqu'au moins au point Att.

Lorsque les caractéristiques nécessaires d'un avion suiveur ne sont pas connues avec le degré de certitude nécessaire, le procédé est avantageusement mis en oeuvre pour créer un espace protégé minimal en considérant un couple {vitesse Vav - distance Ds} choisi, parmi des couples {vitesse - distance} associés à différents modèles d'avions suiveurs envisagés, pour déterminer les distances entre les changements de configuration afin de produire un espace protégé compatible avec n'importe lequel des dits différents modèles d'avions suiveurs envisagés.

L'invention concerne aussi un dispositif pour créer un espace protégé continu le long d'une trajectoire d'un avion dans lequel espace protégé une vitesse maximale Vtc induite dans un tourbillon de rayon Rtc d'un sillage de l'avion est diminuée par une augmentation du rayon Rtc.

Le dispositif détermine des moments auxquels au moins deux changements successifs de configuration aérodynamique de l'avion doivent être réalisés pour créer l'espace protégé continu et comporte:

- au moins une mémoire dans laquelle sont stockées des informations représentatives des caractéristiques de propagation des perturbations de sillage et des informations sur l'avion et son environnement ;
- des moyens de calcul pour générer des instructions de changements successifs de configurations aérodynamiques (5-6), (6-7), (7-8) de l'avion (1) de telle sorte que des perturbations de sillage ayant pour effet d'augmenter le rayon Rtc provoquées par lesdits changements de configuration se propagent dans le tourbillon et créent l'espace protégé continu après un temps prédéterminé compte tenu des informations stockées dans la mémoire.

Avantageusement le dispositif comporte des moyens de génération de signaux d'instruction de changement de configuration de l'avion qui sont soumis à un équipage de conduite de l'avion qui est en mesure d'effectuer les changements de configuration nécessaires ou à contrôler la bonne exécution des changements de configuration et ou qui sont transmis à des systèmes de commandes agissant sur les changements de configurations de l'avion pour réaliser les changements de configuration aux moments nécessaires.

Pour éviter qu'un avion suiveur entre dans un tourbillon comportant des vitesses supérieures aux vitesses attendues dans les cas où les conditions de créations de l'espace protégé n'ont pas été remplies, le dispositif comporte de préférence des moyens de génération d'un signal d'alarme lorsque les changements de configuration effectués ne sont pas conformes aux changements de configuration aptes à créer un espace protégé continu.

Pour une application efficace du procédé, l'invention concerne également un dispositif d'aide à la gestion d'un trafic d'avions en phase d'approche dans lequel une distance de séparation Ds entre un avion suiveur et un avion le précédent sur une trajectoire d'approche est établie en fonction de capacités de l'avion précédent à créer un espace protégé en appliquant le procédé de l'invention.

La description détaillée d'un exemple de mise en oeuvre et de réalisation de l'invention faite en référence aux figures qui représentent :

Figure 1: déjà citée, une illustration simplifiée de la formation de tourbillons aux extrémités d'une aile d'un avion ;
Figure 2a: une illustration schématique des champs de vitesses induites derrière un avion;
Figure 2b: une illustration simplifiée du champs des vitesses dans un tourbillon particulier ;
Figure 3 : une illustration schématique du phénomène de perturbation de sillage et de sa propagation le long du tourbillon ;
Figure 4a : une illustration d'une trajectoire d'approche comportant des changements de configuration suivant une procédure conventionnelle typique ;
Figure 4b : une illustration d'une trajectoire d'approche comportant des changements de configuration suivant une procédure conforme à l'invention.

L'invention a pour objet un procédé et un dispositif qui diminuent, dans un volume limité de l'espace le long d'une trajectoire d'un avion, par exemple une trajectoire d'approche vers une piste d'atterrissage, les vitesses induites dans des tourbillons générés par l'avion.

La description détaillée du procédé suivant l'invention est faite dans le cas particulier d'une approche en vue d'un atterrissage sur une piste d'atterrissage, mais l'invention est également applicable en toute phase de vol d'un avion.

L'invention est fondée sur l'utilisation d'un phénomène physique particulier qui est désigné dans la suite de l'exposé par l'expression « perturbation de sillage ».

La portance de l'aile est génératrice de tourbillons 3, au moins un à chaque extrémité 21 en envergure de l'aile 2, conséquences de différences de pressions entre une surface inférieure, l'intrados, et une surface supérieure, l'extrados, de l'aile 2 à ses extrémités 21 en envergure, envergure nécessairement finie sur un avion.

Pour la simplification des illustrations seuls les tourbillons 3 d'extrémité de l'aile 2 sont illustrés, étant bien connu par ailleurs que de nombreux tourbillons autres que ceux des extrémités de l'aile sont susceptibles de prendre naissance sur une aile, notamment aux extrémités de surfaces mobiles de l'aile, et que dans certains cas, comme notamment dans le cas de volets hypersustentateurs, ces tourbillons peuvent avoir des intensités supérieures à ceux des extrémités de l'aile.

La description de l'invention s'applique également à ces différents tourbillons.

Le phénomène de perturbation de sillage exploité par l'invention prend naissance lorsque qu'une aile d'avion voit une répartition de portance suivant l'envergure changer rapidement, en général à portance totale sensiblement constante au cours d'une phase de vol.

La perturbation de sillage déstructure les tourbillons en ne modifiant que peu ou pas leurs intensités mais en diminuant de façon importante leurs vitesses induites en augmentant des rayons caractéristiques des tourbillons.

Ce phénomène en lui-même est connu des spécialistes de l'aérodynamique mais il est vécu aujourd'hui comme un phénomène nuisible qui perturbe les mesures réalisées en aérodynamique et détériore la précision des mesures.

Pour analyser plus en détail le phénomène de perturbation de sillage et ses effets, un seul tourbillon est considéré dans un premier temps, le phénomène étant applicable à l'ensemble des tourbillons générés par une aile d'avion.

Comme schématisé sur la figure 1, un tourbillon 3 prend naissance dans la masse d'air dans laquelle évolue l'avion 1 en un point particulier de l'aile 2. Comme l'aile 2 de l'avion 1 se déplace par rapport à l'air, l'avion 1 laisse derrière lui dans la masse d'air un tourbillon 3 qui se développe sensiblement le long d'une trajectoire suivie par l'avion 1.

Dans la pratique, le tourbillon s'écarte de la trajectoire verticalement en raison d'une vitesse descendante due à une dynamique induite par le tourbillon et ou dans d'autres directions variables en fonction de facteurs atmosphériques perturbant par exemple tels que des vents ou des gradients de températures.

L'avion 1 se déplaçant dans l'air avec une vitesse Va, le temps Tt, pour une section considérée du tourbillon 3, écoulé depuis le passage de l'avion 1 est équivalent à une distance Dt à laquelle se situe l'avion par rapport à ladite section en raison de la relation Dt = Va x Tt.

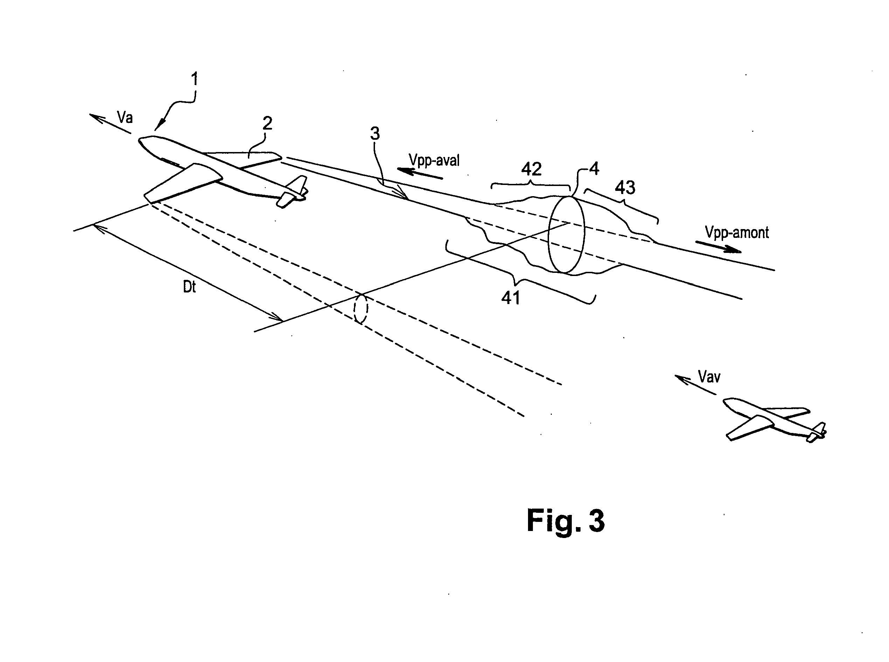

Comme illustré sur la figure 3, la perturbation de sillage générée à un instant donné dans la section 4 de la trajectoire se développe d'une part suivant son rayon et d'autre part propage ses effets sur le rayon du tourbillon 3 dans une zone 41 le long dudit tourbillon, c'est à dire que la perturbation de sillage affecte progressivement des sections du tourbillon dans des zones 42 situées du côté de l'avion 1 par rapport à la section 4 initialement perturbée et des sections du tourbillon dans des zones 43 situées du côté opposé à l'avion 1 par rapport à la section 4 initialement perturbée.

Ainsi, si au moment de la modification de la répartition de portance la perturbation de sillage a ses effets limités dans une section 4 du tourbillon 3, en pratique sur une faible longueur du tourbillon suivant la trajectoire suivie par l'avion 1, après un certain temps, alors que l'avion s'est éloigné sur sa trajectoire de l'emplacement où est née la perturbation de sillage, la zone 41 suivant la trajectoire du tourbillon 3 affectée par la perturbation de sillage est augmentée et continue d'augmenter au fur et à mesure que le temps passe et que donc l'avion 1 progresse sur sa trajectoire.

Ce phénomène est ici désigné sous le terme de propagation de la perturbation de sillage.

La propagation de la perturbation de sillage se déplace avec une vitesse Vpp-aval dans la direction du déplacement de l'avion 1 sur sa trajectoire et avec une vitesse Vpp-amont dans le sens opposé le long de la trajectoire.

Les vitesses Vpp-aval et Vpp-amont ne sont pas constantes en absolu.

Cependant, dans le cas d'un avion civil lourd, de masse supérieure à 136 tonnes, dans des conditions d'approche courantes, ces vitesses de propagation sont du même ordre de grandeur et estimées de l'ordre d'une dizaine de mètres par seconde, valeurs pouvant avantageusement être vérifiées expérimentalement, numériquement ou encore théoriquement pour chaque cas d'espèce, c'est à dire pour chaque modèle d'avion, pour chaque moyen de génération d'une perturbation de sillage et pour chaque condition atmosphérique pour laquelle le moyen de génération d'une perturbation est mis en oeuvre.

On notera que ces vitesses sont d'un ordre de grandeur différent des vitesses de vol des avions commerciaux conventionnels sur des trajectoires d'approche qui pour les avions considérés sont de l'ordre de 70 m/s en moyenne.

Ce phénomène étant bien compris dans ses effets, il convient de noter que des changements de la configuration aérodynamique d'une aile d'avion sont en général des sources de modification de la répartition de portance sur l'aile.

De tels changements de configurations bien connus correspondent par exemple à des mouvements, extensions ou rétraction, de dispositifs hypersustentateurs de l'aile, essentiellement des volets de bord de fuite d'une part et des becs de bord d'attaque d'autre part.

Tous les avions modernes de transport sont pourvus de tels dispositifs, au moins de volets hypersustentateurs, qui sont déployés lors des phases d'approche pour diminuer les vitesses d'atterrissage.

D'autres dispositifs également rencontrés sur de nombreux avions modifient la répartition de portance sur une aile lorsqu'ils sont utilisées, par exemple des spoilers utilisés dans des fonctions aérofreins ou de destructeurs de portance.

De manière générale toute surface mobile d'un avion, notamment les ailerons, utilisés pour le contrôle de l'avion en roulis, modifient également la répartition de portance sur l'aile lorsqu'ils sont utilisés.

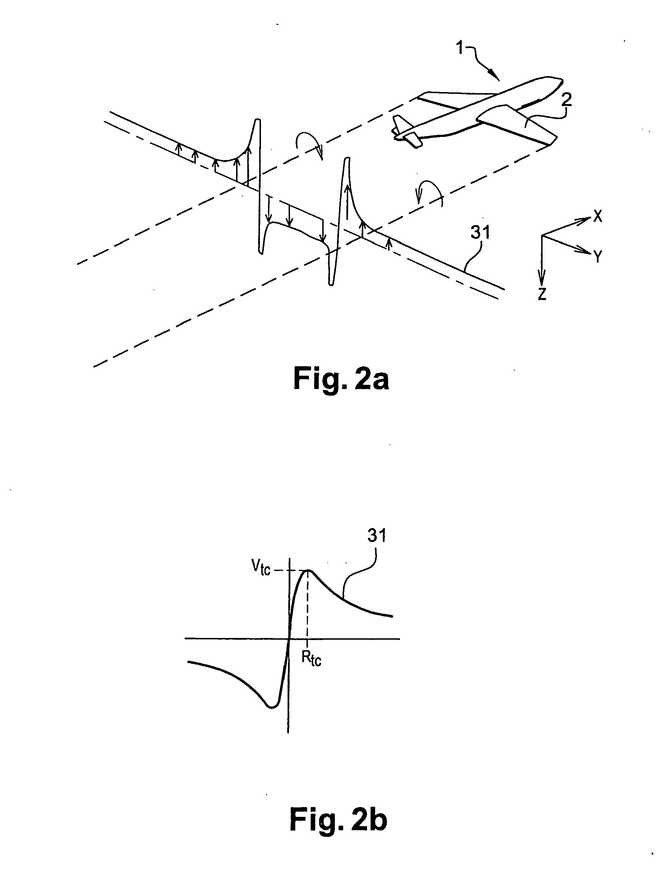

Suivant l'invention, au cours d'une phase de vol de l'avion 1 pendant laquelle il est souhaité diminuer les vitesses induites dans des tourbillons, dont un champs de vitesse 31 est illustré sur la figure 2a, générés dans un volume donné de l'espace en arrière dudit avion, des perturbations de sillage sont générées, par des moyens de l'avion 1, à des instants particuliers du vol de sorte que les dites perturbations de sillage vont augmenter un rayon Rtc des tourbillons 3 générés par l'aile 2 de l'avion de telle sorte que les vitesses induites dans les tourbillons 3, en particulier une vitesse maximale Vtc correspondant à la définition du rayon Rtc du tourbillon comme illustré sur la figure 2b, soient diminuées d'une valeur donnée pour un avion 10 suiveur à une certaine distance, par rapport à un cas ne mettant pas en oeuvre l'invention, ou que la distance minimale avec un avion 10 suiveur puisse être diminuée sans que les vitesses induites dans le tourbillon 3 pouvant être rencontrées par ledit avion suiveur soient augmentées, par rapport à un cas ne mettant pas en oeuvre l'invention.

Les perturbations de sillage sont générées, pour les phases d'approche pendant lesquelles le problème est critique pour les avions suiveurs 10, avantageusement avec des moyens existants de l'avion 1, en déterminant un nombre et des moments de changements des configurations d'approche, c'est à dire essentiellement des changements de positions des becs et des volets, de manière à maximiser un volume continu de l'espace dans lequel les perturbations de sillage se sont propagées et dans lequel dit volume le rayon Rtc est augmenté d'au moins une valeur prédéfinie du fait de la perturbation de sillage.

Un exemple d'application du procédé est décrit dans un cas particulier et avec des valeurs numériques et des hypothèses simplifiées, cependant représentatives d'un cas réel pour des avions civils.

Cet exemple d'application numérique n'est pas limitatif et l'homme du métier est en mesure d'appliquer le procédé décrit à chaque cas particulier, si besoin en effectuant les vérifications expérimentales, numériques ou théoriques pour déterminer les valeurs de paramètres à prendre en compte afin d'assurer une mise en oeuvre adaptée du procédé.

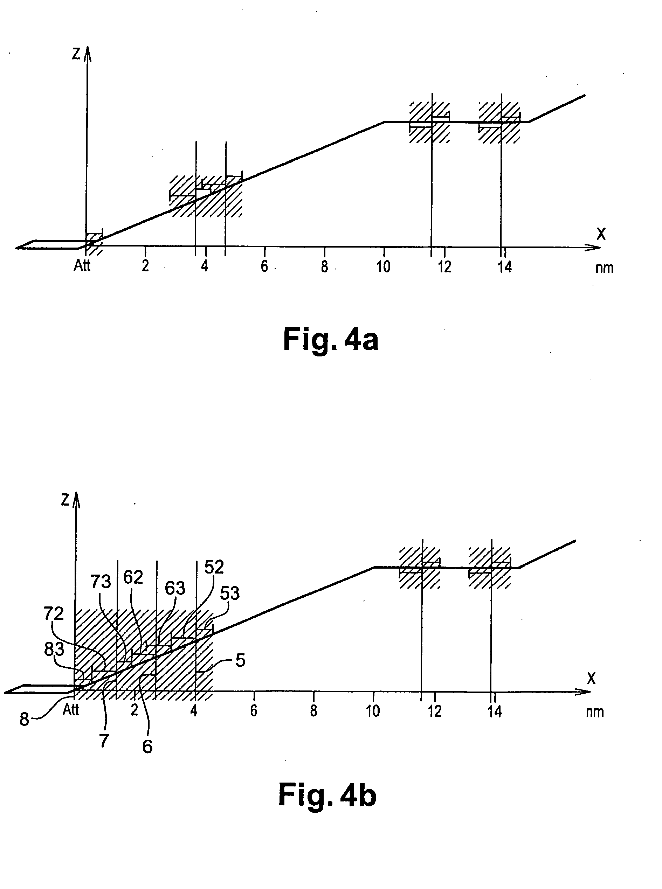

Les figures 4a et 4b illustrent schématiquement une trajectoire d'approche standard d'un avion civil sur une piste d'atterrissage. La trajectoire est représentée dans un plan défini par un axe X horizontal représentant la distance jusqu'à un point Att d'atterrissage suivant une trajectoire curviligne de l'avion et par un axe Z représentant la hauteur au-dessus du point d'atterrissage Att.

Suivant les usages dans le domaine du pilotage des avions, les distances suivant l'axe horizontal X sont exprimées en miles nautiques (nm).

Dans le cas étudié, on cherche à obtenir dans un espace de vol d'un avion suiveur 10 un tourbillon tel que le rayon Rtc dudit tourbillon est augmenté au moins d'une valeur ΔRt%, par exemple 50%, du fait de la perturbation de sillage par rapport au rayon que ledit tourbillon aurait dans la même section au même instant en absence de perturbation de sillage.

Un espace répondant à ce critère est désigné dans la suite de l'exposé par l'expression « espace protégé ».

Une valeur de 50% pour ΔRt% correspond approximativement à une diminution de la circulation du tourbillon de 100m2/s dans le cas d'un tourbillon de 800m2/s.

L'augmentation de ΔRt% du rayon est obtenue après un temps ΔTps, par exemple environ 15 secondes pour Δrt%=50% dans l'exemple utilisé, après l'arrivée de la perturbation de sillage dans une section considérée du tourbillon.

A la vitesse de vol Vav de l'avion 10 suiveur, l'avion parcourt une distance Ds, correspondant à la distance réglementaire de séparation entre des avions de la catégorie lourd, en un temps dit temps de séparation Ts égal à Ds/Vav.

Le temps Ts représente l'âge du tourbillon dans lequel est susceptible de pénétrer l'avion suiveur 10.

Lorsqu'un changement de configuration de l'avion 1 précédent ayant provoqué une perturbation de sillage s'est produit depuis au plus un temps égal à Ts-ΔTps, l'espace dans lequel le tourbillon 3 est affecté par la propagation de la perturbation de sillage au bout d'une durée Ts subit les effets de la dite perturbation de sillage pendant au moins la durée ΔTps et correspond à un espace protégé 41.

En tout point dudit espace 41 un rayon Rtc du tourbillon 2 s'est développé pendant au moins la durée ΔTps et donc que ledit rayon Rtc dudit tourbillon dans la zone ayant subit l'influence de la perturbation de sillage est augmenté d'au moins ΔRt%.

Pendant la durée ΔTps nécessaire à garantir la croissance du rayon du tourbillon 3 dans toutes les sections de l'espace protégé 41, l'avion suiveur 10 aura parcouru une distance de ΔTps x Vav.

L'avion suiveur 10 se déplaçant à la vitesse Vav le long de la trajectoire et la perturbation de sillage se propageant en direction de l'avion suiveur 10 à la vitesse Vpp-amont, ledit avion suiveur pénètre, éventuellement, dans l'espace protégé 41 au plus tôt après un temps Tamont suivant le changement de configuration correspondant au temps pour parcourir la distance Ds - ΔTps x Vav à la vitesse de rapprochement Vav + Vpp-amont somme de la vitesse de l'avion suiveur 10 et de la vitesse de propagation de la perturbation de sillage en direction dudit avion suiveur (les vitesses sont considérées ici en module).

Au dit temps Tamont, la perturbation de sillage s'est propagée en amont, à la vitesse Vapp-amont, suivant la trajectoire suivie par l'avion 1 précédent et le volume 43 de l'espace protégé 41 du côté des X positifs suivant la trajectoire de l'avion 1 par rapport au point de changement de configuration, sur une distance Damont égale à Tamont x Vpp-amont.

Un avion suiveur 10 se déplaçant à la vitesse Vav aura donc un espace protégé amont 43, en amont de la section 4 correspondant à un point de changement de configuration d'un avion 1 précédent, qui s'étend à une distance Damont :

$$Damont = ( Ds − \Delta Tps \times Vav ) \times Vpp\text{-}amont / ( Vav + Vpp\text{-}amont)$$

Expression dans laquelle les termes ont les sens définis antérieurement.

En aval de la section 4 de changement de configuration de l'avion 1 précédent, la perturbation de sillage se propage à la vitesse Vpp-aval, suivant la direction de déplacement de l'avion1 précédent qui est également la direction de déplacement de l'avion suiveur 10. L'avion suiveur 10 va donc rattraper la zone du sillage de l'avion 1 précédent qui n'appartient plus à un espace protégé aval 41 avec une vitesse relative Vav diminuée de la vitesse Vpp-aval de propagation de la perturbation de sillage vers l'aval.

L'avion suiveur 10 atteint, suivant un raisonnement similaire au cas précédent, la limite de l'espace protégé aval 42 en aval de la section 4 correspondant au point de changement de configuration à une distance Daval :

$$Daval = ( Ds − \Delta Tps \times Vav ) \times Vpp\text{-}aval / ( Vav − Vpp\text{-}aval)$$

Expression dans laquelle les termes ont les sens définis antérieurement et dans laquelle les vitesses sont considérées en module.

L'application des formules précédentes permet de donner un ordre de grandeur des dimensions de l'espace protégé dans un cas pratique réaliste.

On retient $\Delta Rt\% = 50\%$ pour $\Delta Tps = 15s$.

Avec Vav = 70m/s, Ds = 4 nm (séparation entre avion de la catégorie lourd) et avec Vpp-amont = Vpp-aval = 14 m/s, ont obtient:

Damont = 1060 m = 0,57 nm
Daval = 1590 m = 0, 86 nm
soit un espace protégé qui s'étend au total sur 2650 m ou 1,43 nm

Lorsque l'avion 1 précédent effectue deux changements de configurations successifs, un premier changement 5, 6, 7 entre une configuration n-1 et une configuration n puis un second changement, respectivement 6, 7, 8, entre la configuration n et une configuration n+1, suivant l'invention les dits deux changements de configuration sont effectués de telle sorte que la somme de la longueur Daval(n) suivant X de l'espace protégé 52, 62, 72 vers l'aval associée au premier changement de configuration et de la longueur Damont(n+1) suivant X de l'espace protégé, respectivement 63, 73, 83 vers l'amont associé au second changement de configuration soit au plus égal à la distance parcourue par l'avion 1 précédent entre les deux changements de configuration 5 et 6, 6 et 7, 7 et 8.

Lorsque plusieurs changements de configuration 5, 6, 7, 8 sont réalisés de telle sorte que chaque changement est effectué par rapport au changement de configuration précédent suivant les critères qui viennent d'être décrits, l'espace protégé associé aux dits changements de configuration successifs ne présente pas de discontinuité suivant la trajectoire et s'étend de l'amont, depuis la distance Damont(n), du premier changement de configuration situé en amont sur la trajectoire suivie par l'avion 1, jusqu'à la distance Daval(n+1), d'un dernier changement de configuration situé en aval sur ladite trajectoire.

En pratique, suivant l'exemple numérique précédent et en supposant inchangées les valeurs caractéristiques des conditions de propagation associées aux changements de configuration ont obtient un espace protégé de 5300 m ou 2,86 nm avec deux changements de configuration.

Sur la figure 4b, trois changements de configuration 5, 6, 7 sont réalisés avant un atterrissage 8 et dans ce cas, toujours avec les mêmes hypothèses que celles de l'exemple numérique, l'espace protégé jusqu'à l'atterrissage au point Att est porté à 9010 m ou 4,86 nm, correspondant à la somme des espaces protégés obtenus en aval 52, 62, 72 et en amont 53, 63, 73, 83 pour chaque changement de configuration, la distance aval liée à la l'atterrissage 8 n'étant pas considérée ici.

Ainsi dans les zones dans lesquelles les tourbillons d'un avion 1 précédent sont les plus dangereux pour un avion suiveur 10, c'est à dire les zones proches du sol, en particulier en approche sur une piste d'atterrissage, le procédé suivant l'invention consiste à réaliser des changements de configuration 5, 6, 7, 8 de l'avion 1 précédent, ayant chacun pour effet de déclencher une perturbation de sillage dudit avion 1 précédent, à des instants ou à des distances entre changements tels qu'un volume choisi le long de la trajectoire dudit avion 1 précédent soit entièrement affecté, suivant un critère donné, par la perturbation de sillage au moment où l'avion suiveur 10 est susceptible de pénétrer dans le sillage de l'avion 1 précédent compte tenu de la distance de séparation Ds.

Pour une phase d'atterrissage comme illustrée sur la figure 4b dans laquelle l'application du procédé s'avère particulièrement intéressante, la partie de la trajectoire affectée par la perturbation de sillage, segment de trajectoire correspondant à la longueur hachurée sur la figure 4b, est choisie pour s'étendre de préférence jusqu'au sol et remonter le long de la trajectoire jusqu'à la plus grande distance possible du point d'atterrissage Att.

La situation obtenue par l'application du procédé de l'invention dont l'exemple est présenté sur la figure 4b est avantageusement comparée à la situation de la figure 4a qui illustre une approche conventionnelle d'un avion, approche conventionnelle qui subit mais ignore le phénomène de perturbation de sillage et n'utilise pas le dit phénomène pour créer un espace protégé déterminé.

Dans cette approche conventionnelle, deux changements de configuration de l'avion sont réalisés en phase d'approche terminale, au cours des 6 nm précédent l'atterrissage, sensiblement à 4,5 nm et à 3,5 nm du point Att de l'atterrissage.

Dans ce cas une zone importante de la trajectoire, depuis environ 3 nm jusqu'à 0,5 nm du point Att, ne correspond pas à un espace protégé au sens de l'invention et il n'est pas possible de considérer pour l'avion suiveur que les vitesses induites dans les tourbillons pouvant être rencontrées sont réduites.

En outre les zones, créées par les deux changements de configuration, soumises aux perturbations de sillage se recouvrent excessivement sans précaution particulière, et de façon fortuite, ce qui ne permet pas de bénéficier d'un espace protégé optimisé.

Il doit être noté que lors de l'atterrissage au point Att, le changement rapide de l'assiette de l'avion 1 génère en lui-même une variation de la répartition de portance assimilable à un changement de configuration 53. L'atterrissage induit donc une perturbation de sillage qui propage ses effets en remontant vers l'amont de la trajectoire en particulier.

Avantageusement, les changements de configuration sont réalisés par des changements de positions des becs et des volets par étapes successives depuis une configuration dans laquelle les becs et les volets sont totalement rétractés, configuration dite lisse, ou depuis une configuration initiale dans laquelle les dits becs et volets sont partiellement sortis, vers une configuration atterrissage ou les becs et les volets sont totalement sortis.

La plupart des avions disposent de positions intermédiaires des becs et des volets entre les positions lisse et atterrissage qui peuvent être utilisées comme moyens de changement de configuration pour la présente invention.

En outre dans le cadre de l'application de l'invention il est aisé de définir un nombre plus important de configurations intermédiaires pour optimiser le volume de l'espace affecté par l'effet de la perturbation de tourbillon tout en restant dans les contraintes opérationnelles de l'atterrissage de l'avion et sous réserve que la modification de la répartition de portance induite crée une perturbation de sillage suffisante vis à vis de l'effet recherché.

Par exemple pour l'approche illustrée sur la figure 4b une configuration aérodynamique intermédiaire a été créée, par rapport au cas de l'approche illustré sur la figure 4a, afin d'augmenter les dimensions de l'espace protégé.

Pour réaliser les dites modifications de répartitions de portance nécessaires, il est également possible d'utiliser d'autres moyens de l'avion que les volets et les becs, par exemple utiliser des destructeurs de portance ou spoilers ou utiliser des ailerons.

Dans ce dernier cas avantageusement les spoilers sont mis en oeuvre dans une phase de vol de l'approche suffisamment amont pour limiter leur utilisation prés du sol et, contrairement à leur mode d'utilisation le plus généralisé, par des actions fortement modulées plutôt que par la recherche d'une position moyenne peu mobile qui serait peu génératrice de perturbation de sillage.

L'exemple qui vient d'être détaillé doit être appliqué en tenant compte de chaque situation particulière et notamment :

- des vitesses des avions sur les trajectoires;
- des distances de séparation considérées ;
- des vitesses de propagation des perturbations de sillage, et en particulier des conditions atmosphériques, pression, température, vent..., qui affectent les dites vitesses de propagation et sont généralement connues lors d'un vol;
- ...

La mise en oeuvre du procédé suppose que sont préalablement déterminées les signatures tourbillonnaires de l'avion 1 considéré pour chacune de ses différentes configurations utilisables et les vitesses de propagation Vpp-amont et Vpp-aval des effets de la perturbation de sillage dans le sens amont et dans le sens aval pour chaque changement de configuration, ces vitesses pouvant être plus ou moins différentes pour un avion considéré contrairement à l'exemple numérique utilisé.

Ces valeurs sont avantageusement établies expérimentalement et ou au moyen de simulations numériques et ou d'approches théoriques.

La détermination de l'espace protégé dépend de la vitesse Vav de l'avion 10 suiveur et de la distance Ds de séparation.

Si ces paramètres, qui ne dépendent pas de l'avion 1 précédent qui doit appliquer le procédé pour maximiser l'espace protégé, ne sont pas connus dudit avion 1 précédent, avantageusement ce dernier applique une procédure compatible avec tous les types d'avions suiveurs 10 potentiels en considérant une vitesse Vav de l'avion suiveur correspondant à la vitesse maximale pouvant être effectivement considérée pour un avion suiveur en approche et une distance Ds de séparation correspondant à la distance de séparation minimale possible pour l'avion suiveur.

Il convient de remarquer que le procédé permet de réduire les vitesses induites dans les tourbillons générés par l'aile d'un avion, dans un volume donné le long de la trajectoire, cas de l'exemple décrit de manière détaillée mais que, dans un mode particulier de mise en oeuvre du procédé, les distances de séparation entre les avions dans les phases d'approche et atterrissage sont réduites en conservant le niveau des vitesses induites dans le tourbillon admises sans la mise en oeuvre de l'invention.

Pour la mise en oeuvre du procédé un dispositif suivant l'invention comporte avantageusement un équipement, par exemple un équipement embarqué à bord de l'avion 1, lequel équipement reçoit, d'autres équipements de l'avion 1 et ou de l'avion suiveur 10 et ou d'installations au sol, les informations nécessaires sur l'avion, en particulier des informations nécessaires pour établir sa position par rapport à la piste d'atterrissage et sa vitesse, et les informations nécessaires sur l'environnement de l'avion, en particulier des informations nécessaires pour établir les valeurs des paramètres atmosphériques influents et la distance et la vitesse de l'avion suiveur.

En fonction de ces paramètres et de constantes mémorisées, en particulier les caractéristiques de propagation des perturbations de sillage dans différentes conditions, l'équipement détermine la séquence des changements de configuration en appliquant le procédé décrit.

Avantageusement, les valeurs de paramètres dont la valeur exacte est difficile à connaître, dans l'état des systèmes actuellement en exploitation, sont fixées à des valeurs par défaut ou évaluées à des valeurs approchées en fonction de paramètres dont les valeurs sont accessibles aisément.

Dans les cas où des valeurs approchées sont utilisées, les dites valeurs utilisées sont choisies pour garantir que les perturbations de sillages se sont effectivement propagées dans le volume voulu d'espace protégé.

Par exemple, les vitesses d'approche des avions dans les phases de vol des zones terminales des aéroports étant relativement voisines pour les différents avions de transport civil, il est avantageux de choisir une vitesse Vav constante pour le calcul des distances Damont et Daval qui minimise (par précaution) lesdites distances, c'est à dire une vitesse Vav correspondant aux vitesses maximales à prendre en considération dans l'espace aérien considéré.

Dans un autre exemple, des valeurs enveloppes de Damont et de Daval sont établies dans un premier temps à partir desquelles des valeurs minimales de Damont et de Daval sont retenues pour la gestion des trajectoires d'approche et des changements de configurations aérodynamiques.

Dans une forme de réalisation le dispositif envoie des ordres aux surfaces mobiles de l'aile, par exemple au système de commande des becs et des volets, le cas échéant au système de commande des spoilers et ou au système de commande des ailerons, pour engager les actions de changements de configuration souhaités.

Dans une forme particulière de réalisation le dispositif est incorporé dans un système de gestion optimisé de la trajectoire de l'avion, un critère d'optimisation de l'espace protégé étant alors pris en compte par ledit système de gestion de la trajectoire.

Dans une autre forme de réalisation le dispositif génère des signaux destinés à l'équipage de conduite du vol, par exemple des messages sonores et ou visuels, pour indiquer les différentes configurations à sélectionner à chaque moment où doit être réalisé un changement de configuration.

Avantageusement, le dispositif surveille que les différentes configurations souhaitées ont bien été appliquées, automatiquement ou manuellement, et des messages d'information sur l'exécution de la séquence des changements de configurations sont envoyés par exemple aux services du contrôle des vols ou à destination de l'avion suiveur, les dits messages d'information pouvant prendre la forme de message d'alarme si la séquence souhaitée pour réduire l'intensité des tourbillons de sillage n'a pas pu être totalement respectée et que dans ce cas il n'est pas exclu que l'avion suiveur pénètre dans un sillage avec des tourbillons d'intensités supérieures à celles prévues si aucune action correctrice n'est mise en oeuvre.

Dans une forme particulière de réalisation du dispositif, tout ou partie du dispositif suivant l'invention est intégré dans un ou dans des équipements existants dans l'avion, par exemple dans un calculateur de gestion de vol.

Appliqué à des situations particulières l'invention permet de ne pas augmenter des distances de séparation, ou d'en limiter l'augmentation, pour des combinaisons particulières d'avions précédents et d'avions suiveurs qui nécessiteraient sans l'invention d'augmenter ces distances, et permet le cas échéant de réduire l'espacement minimum exigé sans l'invention entre un avion suiveur et un avion précédent.

Ainsi l'invention concerne un dispositif avantageusement intégré dans des moyens tels que ceux utilisés par des centres de contrôle aérien pour la gestion d'un trafic d'avions en phase d'approche.

Dans un tel dispositif, une distance de séparation Ds entre un avion suiveur 10 et un avion 1 le précédant sur une trajectoire d'approche est déterminée de manière différente suivant que l'avion 1 précédent applique ou non une procédure d'approche permettant de générer un espace protégé au sens de l'invention.

L'invention permet donc de réduire pour un avion suiveur le risque encouru du fait de l'existence d'un tourbillon généré par le passage d'un avion précédent notamment lors d'une phase d'approche terminale sur une piste d'atterrissage ou, sans créer de risque spécifique, de diminuer l'espacement entre l'avion suiveur et l'avion précédent.

**Revendications**

1. Procédé pour créer un espace protégé continu le long d'une trajectoire d'un avion (1), dans lequel dit espace protégé une vitesse maximale Vtc induite dans un tourbillon (3) de rayon Rtc d'un sillage de l'avion (1) est diminuée par une augmentation du rayon Rtc, le dit procédé étant **caractérisé en ce qu'**il comporte :

    - une étape préalable d'identification de changements de configurations aérodynamiques (5, 6, 7, 8) de l'avion (1) aptes à déclencher des perturbations de sillage ayant pour effet d'augmenter le rayon Rtc ;
    - pour chaque changement de configuration (5, 6, 7, 8) apte à déclencher une perturbation de sillage, la détermination préalable de caractéristiques de propagation des perturbations de sillage dans des sections du tourbillon (3) voisines d'une section (4) du tourbillon au niveau de laquelle a été réalisé ledit changement de configuration
    - la réalisation le long de la trajectoire de l'avion (1) d'au moins deux changements de configuration séparés (5-6), (6-7), (7-8) sur la dite trajectoire par une distance telle que des espaces, dans lesquels les effets des perturbations de sillage conséquences de chacun des dits aux moins deux changements de configuration se sont propagés pendant une durée prédéterminée, sont séparés d'une distance sensiblement nulle ou se recouvrent afin de créer un espace protégé continu.

2. Procédé suivant la revendication 1 dans lequel les caractéristiques de propagation d'une perturbation de sillage comportent :

    - une durée $\Delta$Tps correspondant au temps nécessaire pour que le rayon Rtc du tourbillon augmente d'une valeur $\Delta$Rt% prédéfinie dans une section du tourbillon sous l'effet de la perturbation de sillage après que ladite perturbation de sillage a atteint ladite section du tourbillon ;
    - une vitesse de propagation Vpp-amont de la perturbation de sillage le long du tourbillon (3) dans une direction, dite direction amont, opposée à la direction du déplacement de l'avion (1) le long de sa trajectoire ;
    - une vitesse de propagation Vpp-aval de la perturbation de sillage le long du tourbillon (3) dans une direction, dite direction aval, correspondant à la direction du déplacement de l'avion (1) le long de sa trajectoire.

3. Procédé suivant la revendication 2 dans lequel la distance séparant un point d'un changement de configuration, dit premier changement de configuration, d'un point d'un changement de configuration, dit second changement de configuration, suivant le premier changement de configuration le long de la trajectoire de l'avion (1), est fonction d'une distance de séparation Ds entre l'avion (1) et un avion suiveur (10) situé en amont sensiblement sur la même trajectoire que l'avion (1) et d'une vitesse Vav de l'avion suiveur (10), ladite valeur Vav étant une valeur mesurée de la vitesse de l'avion suiveur, ou une valeur estimée de la vitesse de l'avion suiveur, ou une valeur arbitraire majorante de la vitesse de l'avion suiveur.

4. Procédé suivant la revendication 3 dans lequel la distance séparant le premier et le second changements de configuration est inférieur ou sensiblement égal à la somme d'une distance Daval (52, 62, 72) en aval du point de premier changement de configuration suivant la trajectoire de l'avion (1) et d'une distance Damont (63, 73, 83) en amont du point de second changement de configuration suivant la trajectoire de l'avion (1) avec :

    - Daval = ( Ds - $\Delta$Tps x Vav ) x Vpp-aval / (Vav - Vpp-aval), avec les valeurs de $\Delta$Tps et de Vpp-aval choisies parmi les caractéristiques de propagation de la perturbation de sillage associée au premier changement de configuration;
    - Damont = ( Ds - $\Delta$Tps x Vav ) x Vpp-amont / (Vav + Vpp-amont), avec les valeurs de $\Delta$Tps et de Vpp-amont choisies parmi les caractéristiques de propagation de la perturbation de sillage associée au second changement de configuration.

5. Procédé suivant l'une des revendications précédentes dans lequel les changements de configuration sont réalisés par des changements de position de surfaces mobiles de l'avion (1) et ou par un changement d'assiette de l'avion (1) lors d'un atterrissage.

6. Procédé suivant la revendication 5 dans lequel les changements de configuration sont réalisés le long d'une trajectoire correspondant à une phase d'approche de l'avion (1) se terminant par un atterrissage en un point Att de telle sorte que l'espace protégé continu s'étend depuis un point de la trajectoire d'approche éloigné du point Att jusqu'au moins au point Att.

7. Procédé suivant l'une des revendications 3 à 6 dans lequel un couple {vitesse Vav - distance Ds} est choisi, parmi des couples {vitesse - distance} associés à différents modèles d'avions suiveurs envisagés, pour déterminer les distances entre les changements de configuration afin de produire un espace protégé compatible avec n'importe lequel des dits différents modèles d'avions suiveurs envisagés.

8. Dispositif pour créer un espace protégé continu le long d'une trajectoire d'un avion (1), dans lequel dit espace protégé une vitesse maximale Vtc induite dans un tourbillon (3) de rayon Rtc d'un sillage de l'avion (1) est diminuée par une augmentation du rayon Rtc, **caractérisé en ce que** le dispositif comporte:

   - au moins une mémoire dans laquelle sont stockées des informations représentatives des caractéristiques de propagation des perturbations de sillage et des informations sur l'avion et son environnement ;
   - des moyens de calcul pour générer des instructions de changements successifs de configurations aérodynamiques (5-6), (6-7), (7-8) de l'avion (1) de telle sorte que des perturbations de sillage ayant pour effet d'augmenter le rayon Rtc provoquées par lesdits changements de configuration se propagent dans le tourbillon et créent l'espace protégé continu après un temps prédéterminé compte tenu des informations stockées dans la mémoire.

9. Dispositif suivant la revendication 8 comportant des moyens de génération d'un signal d'alarme lorsque les changements de configuration effectués ne sont pas conformes aux changements de configuration aptes à créer un espace protégé continu.

10. Dispositif d'aide à la gestion d'un trafic d'avions en phase d'approche dans lequel une distance de séparation Ds entre un avion suiveur (10) et un avion (1) le précédant sur une trajectoire d'approche est établie en fonction de capacités de l'avion (1) précédent à appliquer le procédé suivant l'une des revendications 1 à 7.

**Claims**

1. A method for creating a continuous protected space along the path of an aircraft (1), in which protected space a maximum velocity Vtc induced in a vortex (3) of radius Rtc of a wake of the aircraft (1) is decreased by an increase in the radius Rtc, said method being **characterised in that** it includes:

   - a preliminary step of identifying changes in aerodynamic configurations (5, 6, 7, 8) of the aircraft (1) able to trigger disturbances in the wake the effect of which is to increase the radius Rtc;
   - fox each change in configuration (5, 6, 7, 8) able to trigger a disturbance in the wake, the preliminary determination of propagation characteristics of the wake disturbances in sections of the vortex (3) adjacent to a section (4) of the vortex at which said change in configuration was effected;
   - the effecting, along the path of the aircraft (1), of at least two separate changes in configuration (5-6), (6-7), (7-8) on said path by a distance such that spaces, in which the effects of the wake disturbances that are the consequences of each of said at least two changes in configuration are propagated for a predetermined period, are separated by a substantially zero distance or overlap in order to create a continuous protected space.

2. A method according to claim 1, wherein the propagation characteristics of a wake disturbance include:

   - a period $\Delta$Tps corresponding to the time necessary for the radius Rtc of the vortex to increase by a predefined value $\Delta$Rt% in a section of the vortex under the effect of the wake disturbance after said wake disturbance has reached said section of the vortex;
   - a propagation speed Vpp-upstream of the wake disturbance along the vortex (3) in a direction, referred to as the upstream direction, opposite to the direction of movement of the aircraft (1) along the path thereof;
   - a propagation speed Vpp-downstream of the wake disturbance along the vortex (3) in a direction, referred to as the downstream direction, corresponding to the direction of movement of the aircraft (1) along the path thereof.

3. A method according to claim 2, wherein the distance separating a point of a change in configuration, referred to as the first change in configuration, from a point of a change in configuration referred to as the second change in configuration, following the first change in configuration along the path of the aircraft (1), is a function of a separation distance Ds between the aircraft (1) and a following aircraft (10) situated upstream substantially on the same path as the aircraft (1) and a speed Vav of the following aircraft (10), said value Vav being a measured value of the speed of the following aircraft, or an estimated value of the speed of the following aircraft, or a majorant arbitrary value of the speed of the following aircraft.

4. A method according to claim 3, wherein the distance separating the first and second changes in configuration is less than or substantially equal to the sum of a distance Ddownstream (52, 62, 72) downstream of the point of the first change in configuration along the path of the aircraft (1) and a distance Dupstream (63, 73, 83) upstream of the point of second change in configuration along the path of the aircraft (1), with:

- Ddownstream = (Ds - ΔTps x Vav) x Vpp-downstream /(Vav - Vpp-downstream), with the values of ΔTps and Vpp-downstream chosen from the propagation characteristics of the wake disturbance associated with the first change in configuration;
- Dupstream = (Ds - ΔTps x Vav) x Vpp-upstream / (Vav + VPP-upstream), with the values of ΔTps and Vpp-upstream chosen from the propagation characteristics of the wake disturbance associated with the second change in configuration.

5. A method according to one of the preceding claims, wherein the changes in configuration are effected by changes in position of movable surfaces of the aircraft (1) and/or by a change in attitude of the aircraft (1) during a landing.

6. A method according to claim 5, wherein the changes in configuration are effected along a path corresponding to an approach phase of the aircraft (1) ending in a landing at a point Att so that the continuous protected space extends from a point on the approach path distant from the point Att as far at least as the point Att.

7. A method according to one of claims 3 to 6, wherein a pair {speed Vav - distance Ds) is chosen, from the pairs {speed - distance} associated with different models of following aircraft envisaged, in order to determine the distances between the changes in configuration in order to produce a protected space compatible with any of said different models of following aircraft envisaged.

8. A device for creating a continuous protected space along a path of an aircraft (1), in which protected space a maximum speed Vtc induced in a vortex (3) of radius Rtc of a wake of the aircraft (1) is decreased by an increase in the radius Rtc, **characterised in that** the device includes:

- at least one memory in which there is stored information representing the propagation characteristics of the wake disturbances and information on the aircraft and the environment thereof;
- computing means for generating instructions on successive changes in aerodynamic configurations (5-6), (6-7), (7-8) of the aircraft (1) so that wake disturbances the effect of which is to increase the radius Rtc caused by said changes in configuration propagate in the vortex and create the continuous protected space after a predetermined time taking account of the information stored in the memory.

9. A device according to claim 8, including means for generating an alarm signal when the changes in configuration effected are not in accordance with the changes in configuration able to create a continuous protected space.

10. A device aiding the management of aircraft traffic in the approach phase, wherein a separation distance Ds between a following aircraft (10) and an aircraft (1) preceding it on an approach path is established according to the abilities of the preceding aircraft (1) to apply the method according to one of claims 1 to 7.

**Patentansprüche**

1. Verfahren zum Erzeugen eines kontinuierlichen geschützten Raums entlang einer Flugbahn eines Flugzeugs (1), wobei in dem geschützten Raum eine maximale Geschwindigkeit Vtc, die in einem Wirbel (3) mit dem Radius Rtc einer Wirbelschleppe des Flugzeugs (1) induziert wird, durch eine Vergrößerung des Radius Rtc verringert wird, wobei das Verfahren **dadurch gekennzeichnet ist, dass** es umfasst:

- einen vorherigen Schritt zur Identifikation von Änderungen von aerodynamischen Konfigurationen (5, 6, 7, 8) des Flugzeugs (1), die Wirbelschleppenstörungen auslösen können, die den Effekt haben, den Radius Rtc zu vergrößern;

- für jede Konfigurationsänderung (5, 6, 7, 8), die eine Wirbelschleppenstörung auslösen kann, die Vorbestimmung von Ausbreitungseigenschaften der Wirbelschleppenstörungen in Abschnitten des Wirbels (3) benachbart zu einem Abschnitt (4) des Wirbels, auf dessen Höhe die Konfigurationsänderung ausgeführt wurde;

- die Ausführung von mindestens zwei Konfigurationsänderungen (5-6), (6-7), (7-8) entlang der Flugbahn des Flugzeugs (1), die auf der Flugbahn um einen Abstand getrennt sind, so dass Räume, in denen die Effekte der Wirbelschleppenstörungen, die Konsequenzen von jeder der mindestens zwei Konfigurationsänderungen sind, sich während einer vorbestimmten Dauer ausgebreitet haben, um einen Abstand von im Wesentlichen null getrennt sind oder sich überdecken, um einen kontinuierlichen geschützten Raum zu erzeugen.

2. Verfahren nach Anspruch 1, wobei die Ausbreitungseigenschaften einer Wirbelschleppenstörung umfassen:

- eine Dauer $\Delta$Tps, die der Zeit entspricht, die erforderlich ist, damit der Radius Rtc des Wirbels um einen vordefinierten Wert ARt% in einem Abschnitt des Wirbels unter der Wirkung der Wirbelschleppenstörung zunimmt, nachdem die Wirbelschleppenstörung den Abschnitt des Wirbels erreicht hat;

- eine Ausbreitungsgeschwindigkeit Vpp-amont der Wirbelschleppenstörung entlang des Wirbels (3) in einer Richtung, der sogenannten Stromaufwärtsrichtung, die zur Verlagerungsrichtung des Flugzeugs (1) entlang seiner Flugbahn entgegengesetzt ist;

- eine Ausbreitungsrichtung Vpp-aval der Wirbelschleppenstörung entlang des Wirbels (3) in einer Richtung, der sogenannten Stromabwärtsrichtung, die der Verlagerungsrichtung des Flugzeugs (1) entlang seiner Flugbahn entspricht.

3. Verfahren nach Anspruch 2, wobei der Abstand, der einen Punkt einer Konfigurationsänderung, der sogenannten ersten Konfigurationsänderung, von einem Punkt einer Konfigurationsänderung, der sogenannten zweiten Konfigurationsänderung, nach der ersten Konfigurationsänderung entlang der Flugbahn des Flugzeugs (1) trennt, eine Funktion eines Trennabstandes Ds zwischen dem Flugzeug (1) und einem nachfolgenden Flugzeug (10), das sich stromaufwärts im Wesentlichen auf derselben Flugbahn wie das Flugzeug (1) befindet, und einer Geschwindigkeit Vav des nachfolgenden Flugzeugs (10) ist, wobei der Wert Vav ein gemessener Wert der Geschwindigkeit des nachfolgenden Flugzeugs oder ein abgeschätzter Wert der Geschwindigkeit des nachfolgenden Flugzeugs oder ein beliebiger Erhöhungswert der Geschwindigkeit des nachfolgenden Flugzeugs ist.

4. Verfahren nach Anspruch 3, wobei der Abstand, der die erste und die zweite Konfigurationsänderung trennt, geringer als oder im Wesentlichen gleich der Summe eines Abstandes Daval (52, 62, 72) stromabwärts vom Punkt der ersten Konfigurationsänderung entlang der Flugbahn des Flugzeugs (1) und eines Abstandes Damont (63, 73, 83) stromaufwärts vom Punkt der zweiten Konfigurationsänderung entlang der Flugbahn des Flugzeugs (1) ist, wobei:

- Daval = (Ds - $\Delta$Tps x Vav) x Vpp-aval / (Vav - Vpp-aval), wobei die Werte von $\Delta$Tps und von Vpp-aval aus den Ausbreitungseigenschaften der Wirbelschleppenstörung ausgewählt sind, die der ersten Konfigurationsänderung zugeordnet ist;

- Damont = (Ds - $\Delta$Tps x Vav) x Vpp-amont / (Vav + Vpp-amont), wobei die Werte von $\Delta$Tps und von Vpp-amont aus den Ausbreitungseigenschaften der Wirbelschleppenstörung ausgewählt sind, die der zweiten Konfigurationsänderung zugeordnet ist.

5. Verfahren nach einem der vorhergehenden Ansprüche, wobei die Konfigurationsänderungen durch Änderungen der Position von beweglichen Oberflächen des Flugzeugs (1) und/oder durch eine Lageänderung des Flugzeugs (1) bei einer Landung ausgeführt werden.

6. Verfahren nach Anspruch 5, wobei die Konfigurationsänderungen entlang einer Flugbahn ausgeführt werden, die einer Anflugphase des Flugzeugs (1) entspricht, die in einer Landung an einem Punkt Att endet, so dass der kontinuierliche geschützte Raum sich von einem Punkt der Anflugbahn, der vom Punkt Att entfernt ist, bis mindestens zum Punkt Att erstreckt.

7. Verfahren nach einem der Ansprüche 3 bis 6, wobei ein Paar {Geschwindigkeit Vav - Abstand Ds} aus Paaren {Geschwindigkeit - Abstand} ausgewählt wird, die verschiedenen in Erwägung gezogenen nachfolgenden Flugzeugmodellen zugeordnet sind, um die Abstände zwischen den Konfigurationsänderungen zu bestimmen, um einen geschützten Raum zu erzeugen, der mit einem beliebigen der verschiedenen in Erwägung gezogenen nachfolgenden Flugzeugmodelle kompatibel ist.

8. Vorrichtung zum Erzeugen eines kontinuierlichen geschützten Raums entlang einer Flugbahn eines Flugzeugs (1), wobei in dem geschützten Raum eine maximale Geschwindigkeit Vtc, die in einem Wirbel (3) mit dem Radius Rtc einer Wirbelschleppe des Flugzeugs (1) induziert wird, durch eine Vergrößerung des Radius Rtc verringert wird, **dadurch gekennzeichnet, dass** die Vorrichtung umfasst:

- mindestens einen Speicher, in dem Informationen, die die Ausbreitungseigenschaften der Wirbelschleppanstörungen darstellen, und Informationen über das Flugzeug und seine Umgebung gespeichert sind;
- βerechnungsmittel zum Erzeugen von Befehlen für aufeinander folgende Änderungen von aerodynamischen Konfigurationen (5-6), (6-7), (7-8) des Flugzeugs (1), so dass Wirbelschleppenstörungen, die den Effekt haben, den Radius Rtc zu vergrößern, die durch die Konfigurationsänderungen hervorgerufen werden, sich im Wirbel ausbreiten und den kontinuierlichen geschützten Raum nach einer vorbestimmten Zeit unter Berücksichtigung der im Speicher gespeicherten Informationen erzeugen.

9. Vorrichtung nach Anspruch 8 mit Mitteln zur Erzeugung eines Alarmsignals, wenn die durchgeführten Konfigurationsänderungen nicht den Konfigurationsänderungen entsprechen, die einen kontinuierlichen geschützten Raum erzeugen können.

10. Vorrichtung zur Unterstützung bei der Lenkung eines Flugzeugverkehrs in der Anflugphase, in der ein Trennabstand Ds zwischen einem nachfolgenden Flugzeug (10) und einem voraus fliegenden Flugzeug (1) auf einer Anflugbahn in Abhängigkeit von Fähigkeiten des voraus fliegenden Flugzeugs (1), das Verfahren nach einem der Ansprüche 1 bis 7 anzuwenden, festgelegt wird.

Fig. 1

**Fig. 2a**

**Fig. 2b**

Fig. 3

**Fig. 4a**

**Fig. 4b**

**EP 2 212 193 B1**

## RÉFÉRENCES CITÉES DANS LA DESCRIPTION

**Documents brevets cités dans la description**

- FR 2821605
- US 6719246 B
- EP 1746024 A